**Europäisches Patentamt**

**European Patent Office**

**Office européen des brevets**

(11) Veröffentlichungsnummer: **0 503 557 A1**

## (12) EUROPÄISCHE PATENTANMELDUNG

(21) Anmeldenummer: **92104071.3**

(22) Anmeldetag: **10.03.92**

(51) Int. Cl.⁵: **G21F 9/32**

(30) Priorität: **13.03.91 LU 87907**

(43) Veröffentlichungstag der Anmeldung:
**16.09.92 Patentblatt 92/38**

(84) Benannte Vertragsstaaten:
**PT**

(71) Anmelder: **EUROPÄISCHE ATOMGEMEINSCHAFT (EURATOM)**
**Bâtiment Jean Monnet Plateau du Kirchberg**
**L-2920 Luxembourg(LU)**

(72) Erfinder: **Dworschak, Heinz**
**Via Mentana 2**
**I-21023 Cardana di Besozzo(IT)**
Erfinder: **Modica, Giovanni**
**Via G.B. Broncchi 24**
**I-20131 Milano(IT)**
Erfinder: **Mannone, Francesco**
**Via 25 Aprilo 50**
**I-21100 Varese(IT)**

(74) Vertreter: **Weinmiller, Jürgen**
**Lennéstrasse 9 Postfach 24**
**W-8133 Feldafing(DE)**

(54) **Verfahren zum Aufarbeiten von Absorberstäben aus wassergekühlten Kernreaktoren.**

(57) Die Erfindung bezieht sich auf ein Verfahren zum Aufarbeiten von Absorberstäben im Hinblick auf die kompakte und sichere Endlagerung von radioaktiven Stoffen, wobei diese Stäbe als mit Borverbindungen gefüllte Stahlrohre ausgebildet sind. Erfindungsgemäß werden die Stäbe unter Sauerstoffausschluß in ein Schmelzbad eingebracht, das i.w. aus Eisen, Nickel, Chrom oder Mangan besteht und auf einer Temperatur oberhalb 1500°C gehalten wird. Dabei wird das in den Rohren enthaltene Tritium freigesetzt und mit einem inerten Spülgas entfernt und anschließend in einer Tritiumfalle gebunden. Als Ergebnis entsteht ein tritiumfreier monolithischer Block, der im wesentlichen Metallboride und -karbide enthält und endlagerfähig ist.

EP 0 503 557 A1

Die Erfindung bezieht sich auf ein Verfahren zum Aufarbeiten von Absorberstäben im Hinblick auf die kompakte und sichere Endlagerung von radioaktiven Stoffen, wobei diese Stäbe als mit Borverbindungen gefüllte Stahlrohre ausgebildet sind.

In wassergekühlten Kernreaktoren, z.B. Siedewasserreaktoren, erfolgt die Reaktivitätskontrolle mittels Stäben aus Stahl, z.B. vom Typ AISI 304 oder 306, welche mit Borverbindungen, insbesondere $B_4C$ (Borkarbid) gefüllt sind.

Es werden dabei die Absorptionseigenschaften für Neutronen des $^{10}B$-Isotops ausgenützt. In Wechselwirkungen mit thermischen Neutronen bildet dieses Isotop $^7Li$, welches seinerseits mit schnellen Neutronen in Wechselwirkung tritt und Tritium $^3H$ bildet.

Zur Vereinfachung der Darlegungen wird nachfolgend Tritium mit T bezeichnet und tritiumhaltiges Wasser, bei dem ein Teil der normalen Wasserstoffatome durch Tritiumatome ersetzt ist, mit HTO.

Das Isotop $^{10}B$ selbst reagiert auch mit schnellen Neutronen, wobei direkt T gebildet wird. Es ergeben sich also folgende Kernreaktionen:

$$^{10}B + 1n \text{ (thermisch)} \rightarrow {}^7Li + {}^4He$$
$$^7Li + 1n \text{ (schnell)} \rightarrow T + {}^4He + n$$
$$^{10}B + 1n \text{ (schnell)} \rightarrow T + 2{}^4He$$

Typische Abmessungen solcher Stäbe in einem Siedewasserreaktor sind:

| | |
|---|---|
| Innendurchmesser | 4,7 mm |
| Wandungsdicke | 0,67 mm |
| Gesamtlänge | ca. 2900 mm |
| Werkstoff | SS AISI 304 |
| Füllung | 47 g $B_4C$ |

Aufgrund eines Vibriersystems erreicht diese Füllung eine Dichte von ca. 70% der theoretischen Dichte des Borkarbids. Nach der Füllung wird das Rohr evakuiert und verschweißt. In einem typischen Siedewasserreaktor befinden sich 4140 Stäbe, d.h. eine Gesamtmenge von 194 kg Borkarbid.

Nach einem dreijährigen Einsatz in einem Siedewasserreaktor weist ein solcher Stab außer den üblicherweise bei Neutronenbeschuß des Metalls anfallenden radioaktiven Aktivierungsprodukten einen Tritiumhaushalt von 0,85 Ci auf.

Dieses Tritium befindet sich zum größten Teil in der Borkarbidmatrix. Circa 6 Promille des Gesamtanteils an Tritium befindet sich im Hüllenwerkstoff des Stabs und ein noch geringerer Anteil von etwa 0,2 Promille in dem vorhandenen restlichen Gasraum im Stabinneren.

Da die kristalline Struktur des $B_4C$ trotz der Wechselwirkungen mit den Neutronen unverändert geblieben ist, kann das so gebildete Tritium innerhalb der Struktur in verschiedener Weise gebunden sein:

Am wahrscheinlichsten sind Einlagerungen in die Zwischenräume der ikosaedrischen Kristalle des Borkarbids und eine eigentliche stark kovalente chemische Bindung. Diese Tatsache verleiht dem Tritium eine außergewöhnliche Stabilität, so daß es vom Borkarbid erst bei Temperaturen über 700°C unter Ausschluß von Sauerstoff freigesetzt wird. In der Tat beeinflußt die Anwesenheit von Sauerstoff, auch bei Konzentrationen von nur 50 ppm die Freisetzung von Tritium dadurch, daß es zu einer Teiloxidation des Karbids kommt, wobei sich an der Oberfläche eine glasartige Boranhydridschicht bildet, die schließlich die Freisetzung verzögert.

Diese Absorberstäbe können in der Praxis nach ihrem Gebrauch nicht wie ein normales metallisches radioaktives Abfallprodukt, z.B. durch mechanische Zerkleinerung und/oder Kompaktierung für die Endlagerung vorbereitet werden. Erstens ist das Borkarbid durch die Wechselwirkungen mit den Neutronen stark versprödet und damit sehr zerbrechlich geworden. Zweitens weisen die Behälterrohre Haarrisse auf, welche einerseits durch die Wechselwirkungen des Borkarbids mit dem metallischen Werkstoff der Stäbe und andererseits durch den aufgrund der im Inneren der Rohre befindlichen Gase entstehenden Druck oder schließlich auch durch ein Absetzen des Borkarbids während des Neutronenbeschusses und ein damit verbundenes Schwellen im Stab verursacht werden. Im übrigen ist die Abfallbeseitigung durch die nicht zu vernachlässigende Anwesenheit des Tritiums besonders erschwert.

Bis heute wurde noch keine geeignete Lösung zur Kompaktierung solcher Absorberstäbe im Hinblick auf die Endlagerung gefunden, da die Gefahr einer Ausbreitung des Borkarbids und damit einer Freisetzung der mit diesem verbundenen radioaktiven Produkte nicht auszuschließen war. Tatsächlich ist das Borkarbid nach der Bestrahlung so spröde und im Gegensatz zum Ausgangsprodukt so wenig widerstandsfähig gegenüber Wasser, daß das Zerfallen des Borkarbids zu einer feinen Verteilung pulverförmigen radioaktiven Materials führt.

Aufgabe der Erfindung ist es also, ein solches Verfahren anzugeben, das zu einem endlagerungsfähigen Abfallprodukt mit deutlich verkleinertem Volumen führt. Außerdem soll dieses Verfahren das Risiko einer unkontrollierten Verteilung der in den Stäben enthaltenen Radioaktivität dadurch verringern, daß mechanische Behandlungsschritte wie ein Zersägen nicht erforderlich sind.

Diese Aufgabe wird durch das Verfahren gemäß Anspruch 1 gelöst. Bezüglich von Merkmalen bevorzugter Ausführungsformen der Erfindung, die sich insbesondere auf die gleichzeitige Abtrennung und Einsammlung des gesamten Gehalts an Tritium beziehen, wird auf die Unteransprüche verwiesen.

Nachfolgend wird die Erfindung anhand einiger Ausführungsbeispiele dieses Verfahrens näher erläutert.

Beispiel 1

In einem elektrisch beheizten Ofen wird eine Schmelze von Eisen in einem Tiegel aus gesintertem Aluminiumoxid erschmolzen. Der Gasraum über der Schmelze wird mit einem Inertgas, beispielsweise Argon, stetig gespült. Die Temperatur der Schmelze wird auf mindestens 1500°C gebracht und gehalten. Dann wird in die Schmelze das Ende eines aufzuarbeitenden Absorptionsstabs der oben angegebenen Art eingeführt und gemäß der Schmelzgeschwindigkeit nachgeschoben. Die Temperatur der Schmelze wird so hoch gewählt, daß der Hüllwerkstoff des Rohrs schmilzt und damit das Borkarbid der Einwirkung des Eisens der Schmelze ausgesetzt werden kann, wobei sich ein niedrig schmelzendes Eutektikum bildet. Durch die Spülung mit Argon wird verhindert, daß das Bor oxidiert, denn Boroxid wäre bei der Temperatur der Schmelze flüchtig.

Zur Abtrennung des Tritiums, das aus der Schmelze sowohl in elementarer Form (HT) als auch in oxidischer Form (HTO) aufsteigt und vom Spülgas abgeführt wird, eignet sich die auch in der Technologie der Fusionsreaktoren angewandte Methode der totalen Umwandlung in HTO mit Hilfe eines Katalysators bei Temperaturen von einigen hundert Grad Celsius und die anschließende Abtrennung der Wassermoleküle bei Raumtemperatur mit Hilfe von Molekularsieben (oder Zeolithen). Dieser Verfahrensschritt ist an sich bekannt, z.B. aus Proceedings of the International Conference on Tritium Technology in Fission, Fusion and Isotopic Applications, Toronto/Kanada, 1.-6. Mai 1988, siehe "Europ. Tritium Handling Experimental Laboratory" E. Vassallo, J. Bourdon, H. Dworschak, D. Pugh.

Nach Abkühlung der Schmelze befindet sich im Tiegel eine monolithische kompakte Masse, die bei Untersuchung mittels Röntgenfluoreszenzanalyse die Anwesenheit von eutektischen ternären Eisenverbindungen wie $Fe_3C$, $Fe_2B$, $FeC$, $FeB$, wie auch die Anwesenheit von Karbiden und Boriden unterschiedlicher Stöchiometrie von Nickel, Chrom und Eisen zeigt. Dieser Monolith ist ohne weiteres endlagerfähig.

Beispiel 2

Die Schmelze wird in einem Tiegel aus Zirkoniumoxid vorbereitet, der sich in einem elektromagnetischen Induktionsofen befindet. Der Ofen besteht aus einem Quarzrohr, das von einer Induktionsspule umgeben ist und an seinen beiden Enden an den Spülkreislauf angeschlossen ist. Die Temperatur der Schmelze beträgt 1550°C. Wenige Minuten nach Eintrag des zu schmelzenden Stabs ergibt sich eine homogene Masse, die nach dem Abkühlen des Ofens ein monolithisches kompaktes Material ergibt, dessen Anlyse der aus Beispiel 1 gleicht.

Beispiel 3

Statt des Eisens wird für die ursprüngliche Schmelze die gleiche Menge an Nickel verwendet. In diesem Fall ergeben sich überwiegend Nickelboride, aber auch Eisen- und Chromboride bzw. -karbide.

Beispiel 4

Das Eisen der ursprünglichen Schmelze wird durch Kobalt ersetzt. Dabei ergeben sich überwiegend Kobaltboride sowie die üblichen Fe-Ni-Boride bzw. -karbide.

Die Geschwindigkeit der Abkühlung der Schmelze nach dem Einbringen des Stabs hat auf das Ergebnis kaum einen Einfluß, was durch einen Vergleich einer schnellen, durch erhöhten Spülgasdurchsatz bewirkten Abkühlung in einigen Minuten mit einer natürlichen Abkühlung, die über mehr als 12 Stunden verlief, festgestellt wurde.

Auch andere Tiegelmaterialien, insbesondere Tiegel aus Graphit sind gut geeignet, aber auch Tiegel aus hochschmelzenden Metallen anderer Art, wie z.B. Ti, V, Zr, Mo, Hf, Ta, W, Pt, Pd, die mit einer inneren Beschichtung von 5 mm Graphit oder Aluminiumoxid oder Zirkoniumoxid ausgekleidet sind.

Mit dem beschrieben Verfahren lassen sich auch integrale Absorberelemente entsorgen, die aus einer zentralen Führungsstange aus Stahl SS AISI 304 und daran kreuzförmig angeschweißten doppelwandigen Blättern bestehen. Zwischen diesen Blättern befinden sich nebeneinander aufgereiht in Längsrichtung des Stabs 15 der oben angesprochenen Absorberstäbe. Um ein günstigeres Verhältnis zwischen dem in den Ofen einzuführenden Material und dem Durchmesser des Ofens erreichen zu können, kann es zweckmäßig sein, die Blätter vor dem Einschmelzen von der Führungsstange abzuschneiden. Aufgrund der Tatsache, daß der erste Stab neben der Führungsstange in der Regel kein Borkarbid enthält, ist bei geeigneter Wahl der Schneidevorrichtung die Beschädigung von borkarbidhaltigen Stäben und somit eine unerwünschte Freisetzung dieses Materials praktisch ausgeschlossen.

**Patentansprüche**

1. Verfahren zum Aufarbeiten von Absorberstäben aus wassergekühlten Kernreaktoren im Hinblick auf die kompakte und sichere Endlagerung von radioaktiven Stoffen, wobei diese Stäbe als mit Borverbindungen gefüllte Stahlrohre ausgebildet sind, dadurch gekennzeichnet, daß die Stäbe unter Sauerstoffausschluß in ein Schmelzbad eingebracht werden, das i.w. aus Eisen oder Nickel oder Chrom oder Mangan besteht und auf einer Temperatur oberhalb 1500°C gehalten wird.

2. Verfahren nach Anspruch 1, dadurch gekennzeichnet, daß der freie Gasraum über der Schmelze mit einem Inertgas gespült wird.

3. Verfahren nach Anspruch 2, dadurch gekennzeichnet, daß das Spülgas nach dem Durchgang durch den freien Gasraum über der Schmelze einer Tritiumfalle zugeführt wird.

Europäisches
Patentamt

EUROPÄISCHER RECHERCHENBERICHT

Nummer der Anmeldung

EP    92 10 4071

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | EP-A-0 204 634 (C.E.A)<br>* Ansprüche 1-5; Abbildung *<br>--- | 1-3 | G21F9/32 |
| A | FR-A-2 456 332 (D.G.W.K.)<br>* Ansprüche 1-5 *<br>--- | 1-3 | |
| A | DE-A-3 930 420 (BUNDESREPUBLIK DEUTSCHLAND)<br>* Zusammenfassung; Ansprüche 1-3; Abbildung 1 *<br>--- | 1-3 | |
| A | Derwent File Supplier WPIL<br>Derwent Publications ,London, UK<br>& JP-A-1131495 (Ishikawajima)<br>* Zusammenfassung *<br>--- | 1-3 | |
| A | FUSION TECHNOLOGY<br>Bd. 14, September 1988, TORONTO<br>Seiten 911 - 916;<br>VASSALO ET AL.: 'Europ. Tritium Handling<br>Experimental Laboratory'<br>* das ganze Dokument *<br>----- | 1-3 | |
| | | | **RECHERCHIERTE SACHGEBIETE (Int. Cl.5)**<br><br>G21F<br>G21C |

Der vorliegende Recherchenbericht wurde für alle Patentansprüche erstellt

| Recherchenort | Abschlußdatum der Recherche | Prüfer |
|---|---|---|
| DEN HAAG | 07 APRIL 1992 | NICOLAS H.J.F. |